# EUROPÄISCHE PATENTSCHRIFT

(11) **EP 0 409 367 B1**
(45) Veröffentlichungstag und Bekanntmachung des Hinweises auf die Patenterteilung: **12.05.1993**
(21) Anmeldenummer: 90250182.4
(22) Anmeldetag: 17.07.1990
(51) Int. Cl.: C02F 3/32, C02F 11/16, C05F 7/04

(54) **Verfahren und Anlage zur Abwässerreinigung**
Process and plant for purification of waste water
Procédé et installation de traitement d'eaux

(30) Priorität: 19.07.1989 DE 3923832
(43) Veröffentlichungstag der Anmeldung: 23.01.1991
(73) Patentinhaber: Markgraf, Karl, D-38459 Bahrdorf (DE)
(72) Erfinder: Müller, Ewald, D-3181 Gr. Twülpstedt 4 (DE)
(74) Vertreter: Gramm, Werner, Prof., Dipl.-Ing.

(56) Entgegenhaltungen:
- EP-A- 0 123 985
- EP-A- 0 286 582
- DE-A- 3 639 993
- US-A- 3 728 254
- US-A- 4 415 450
- PATENT ABSTRACTS OF JAPAN, Band 13, Nr. 95 (C-573), 6. März 1989; & JP-A-63 274 497 (KYOZO KANEKO) 11-11-1988
- PATENT ABSTRACTS OF JAPAN, Band 12, Nr. 242 (C-510), 8. Juli 1988; & JP-A-63 031 594 (KOICHIRO OKABE) 10-02-1988
- G.W.F. - WASSER/ABWASSER, Band 127, Nr. 9, September 1986, Seiten 429-434; K. BUCKSTEEG: "Sumpfpflanzkläranlage - Verfahrensvarianten, Betriebserfahrungen, Problem Bodenhydraulik"

## Beschreibung

Die Erfindung betrifft ein Verfahren zur Reinigung kommunaler, industrieller und Agrar-Abwässer und zur Gewinnung von verwertbarem Humus sowie eine Anlage hierfür.

Der Erfindung liegt die Aufgabe zugrunde, hierfür ein rein biologisch ablaufendes Verfahren sowie eine hierfür geeignete Anlage zu entwickeln.

Diese Aufgabe wird hinsichtlich des Verfahrens durch folgende Verfahresschritte gelöst:
a) Das zu reinigende Abwasser wird aufgestaut, so daß sich Feststoffe absetzen können;
b) im Überlaufverfahren wird das vorgereinigte Abwasser aus der ersten Staustufe durch filternde, aus Pflanzenresten und/oder Holzstückchen (natürliche Filterstoffe) gebildete Sickerstrecken in zumindest eine weitere Staustufe geleitet;
c) das zurückbleibende Gemisch aus Dickstoffen und Schlamm (Absetzprodukt) wird abgepumpt, durch Abtropfen entwässert, anschließend auf einer Freifläche mit wasserdichtem Untergrund gelagert und schließlich zu Kompost umgewandelt;
d) das bei der genannten Entwässerung sowie bei der genannten Lagerung der Absetzprodukte anfallende Sickerwasser wird dem zu reinigenden Abwasser wieder zugesetzt;
e) zur Bildung eines biologischen Immissionsschutzes werden das aufgestaute Abwasser sowie das aus den Staustufen abgepumpte Absetzprodukt mit biologischen Abdeckstoffen, z.B. Pflanzen-resten, groben Holzhackschnitzeln o.dergl. abgedeckt;
f) die den Immissionsschutz bildenden Stoffe werden bei nachlassender Wirkung gegen neue Stoffe ausgetauscht und den entwässertem Absetzprodukt zur Kompostierung beigegeben (natürliche Zuschlagstoffe).

Hinsichtlich der Anlage wird die Aufgabe durch folgende Merkmale gelöst:
a) Ein erstes Rückhaltebecken zur Aufnahme und als Staustufe für das kontinuierlich zugeleitete zu reinigende Abwasser;
b) dem ersten Rückhaltebecken ist zumindest ein weiteres Rückhaltebecken nachgeordnet, das mit dem ersten Rückhaltebecken über zumindest eine einen Überlauf bildende, aus Pflanzenresten und/oder Holzstückchen und/oder Rohhumus (natürliche Filterstoffe) bestehende Sickerstrecken verbunden ist;
c) zumindest ein Vorratsbehälter, der über ein Pumpen/Leitungssystem mit den Rückhaltebecken verbunden ist, dient zur Aufnahme des abgepumpten Gemisches aus Dickstoffen und Schlamm (Absetzprodukt), weist einen Ablauf für das abtropfende Wasser auf und ist zumindest teilweise gefüllt mit Pflanzen-resten und/oder Holzstückchen;
d) ein mit einem wasserdichten Boden ausgerüsteter freier Lagerplatz, der zur Aufnahme des in dem genannten Vorratsbehälter entwässerten Absetzproduktes dient und zumindest einen Ablauf für Sickerwasser aufweist;
e) die Abläufe des Vorratsbehälters und des genannten Lagerplatzes sind an eines der Rückhaltebecken oder an deren Zulauf angeschlossen;
f) alle Rückhaltebecken sowie der Vorratsbehälter sind mit einer aus biologischen Abdeckstoffen, z.B. Pflanzenresten, groben Holzhackschnitzeln o.dergl. bestehenden Immissionsschutzschicht abgedeckt;
g) ein erdverbundener Kompostierungs-Lagerplatz zur Aufnahme des entwässerten Absetzproduktes vom freien Lagerplatz, vermischt mit den entfernten Filter- und Immissionsschutzstoffen.

Verfahren und Anlage können noch dadurch ergänzt werden, daß das aus der letzten Staustufe austretende vorgereinigte Abwasser auf Sickerflächen geleitet wird, die mit gewässerreinigender Vegetation besiedelt werden (Pflanzbeete).

Mit dem erfindungsgemäßen Verfahren sowie der entsprechenden Anlage läßt sich hochwertiger Humus herstellen und zugleich eine Bereitstellung von brauchbarem Wasser aus geklärtem Abwasser erzielen. Die Anlage kann in unterteilten, dezentralen oder zentralen Formen eingerichtet und betrieben werden. Durch den biologischen Immissionsschutz und die Rieselstrecken aus natürlichen Filterstoffen können lange, teure Kanalisationen für ortsferne zentraltechnische Klärwerke vermieden werden. Im Baukasten system läßt sich eine Größenveränderung der Anlage ohne Betriebsunterbrechung und ohne technische Schwierigkeiten jederzeit vornehmen.

Um Fäkal/Klärschlamm aus dezentralen oder fremden Kläranlagen, beispielsweise über Tankwagen in die erfindungsgemäße Anlage einspeisen zu können, ist es vorteilhaft, wenn das zum Vorratsbehälter führende Leitungssystem einen Anschluß für Fäkal/Klärschlamm aufweist.

Ferner kann es vorteilhaft sein, wenn das Leitungssystem über den Vorratsbehälter geführt und hier hochklappbar ausgebildet. Dadurch wird eine Störung beim Arbeiten mit einem Ladegerät verhindert. Beim Hochklappen des Leitungssystems kann außerdem ein Geruchverschluß betätigt werden, der während der Entleerungs-bzw. Füllzeit des Vorratsbehälters wirksam ist.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung schematisch dargestellt. Es zeigen:

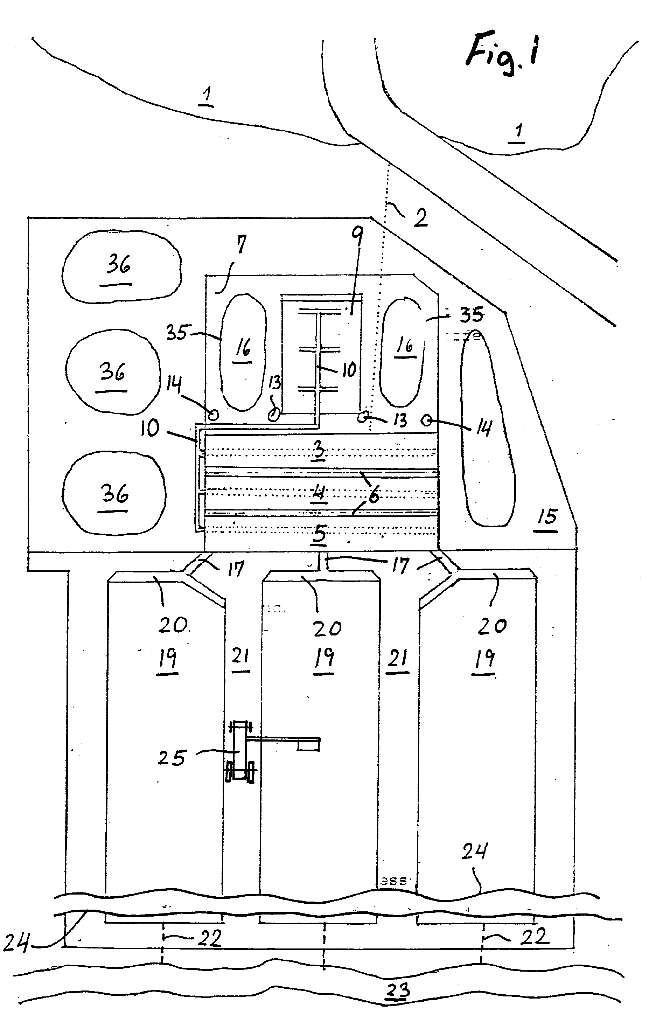

- Figur 1: eine Abwasser-Reinigungsanlage in Draufsicht;
- Figur 2: in verkleinertem Maßstab die Anlage gemäß Figur 1 in Seitenansicht;
- Figur 3: in vergrößertem Maßstab ein Detail der Figur 2;
- Figur 4: in vergrößertem Maßstab in Draufsicht einen Vorratsbehälter und
- Figur 5: in gegenüber Figur 4 verkleinertem Maßstab eine Seiten- oder Stirnwandung eines Vorratsbehälters.

Von einem Ortsrand 1 gelangt das dort anfallende Abwasser über eine Leitung oder Graben 2 in ein erstes Rückhaltebecken 3 zur Aufnahme und als Staustufe für das kontinuierlich zugeleitete zu reinigende Abwasser. Diesem ersten Rückhaltebecken 3 sind gemäß Ausführungsbeispiel zwei weitere Rückhaltebecken 4,5 nachgeschaltet, die untereinander über je eine einen Überlauf bildende Sickerstrecke 6 verbunden sind.

Auf einem freien Lagerplatz 7 ist auf dem mit Gefälle verlegten wasserdichten Boden 8 ein Vorratsbehälter 9 angeordnet, der über ein Leitungssystem 10 mit den Rückhaltebecken 3,4,5 verbunden ist. Letztere sind über je einen Ventilschieber 11, der individuell intervallgesteuert sein kann, an das Leitungssystem 10 angeschlossen, in das eine Pumpe 12 integiert ist, die nach einem bestimmten Programm die sich in den Rückhaltebecken 3,4,5 absetzenden Dickstoffe und Schlamm (Absetzprodukt) in den Vorratsbehälter 9 pumpt. Sowohl der Vorratsbehälter 9 als auch der freie Lagerplatz 7 haben Wasserabläufe 13,14, die an eines der Rückhaltebecken 3,4,5 und/oder an deren Zulauf (Graben 2) angeschlossen sind.

Außerhalb des freien Lagerplatzes 7 ist ein undichter, erdverbundener Kompostierungs-Lagerplatz 15 angeordnet zur Aufnahme des entwässerten Absetzproduktes 16 vom freien Lagerplatz 7, vermischt mit Filter- und Immissionsschutzstoffen, die nachfolgend näher erläutert werden.

Das letzte Rückhaltebecken 5 ist über Zulaufrinnen 17 mit Sickerflächen verbunden, die mit gewässerreinigender Vegetation 18 besiedelt sind und nachfolgend als Pflanzbeete 19 bezeichnet werden. Diese Zulaufrinnen 17 weisen Verteilereinrichtungen 20 auf, die eine gleichmäßige Beschickung der Pflanzbeete 19 mit dem aus dem Letzten Rückhaltebecken 5 austretenden Abwasser gewährleisten. Die Pflanzbeete 19 sind durch Wirtschaftswege 21 unterteilt und können über Ablaufrohre 22 o.dergl. in einen Bach 23 entwässern. Die Pflanzbeete 19 können - wie die Trennlinie 24 andeutet - in ihrer Länge den jeweiligen Abwassermengen bzw. Einwohnergleichwerten angepaßt werden und weisen eine Breite von vorzugsweise 10 bis 12 m auf, so daß eine Pflege der Pflanzbeete und gegen Ende der Vegetationsruhe auch eine maschinelle Aberntung über mit entsprechend langen Auslegern bestückte Maschinen 25 möglich ist.

Die die Rückhaltebecken 3,4,5 miteinander verbindenden Sickerstrecken 6 sind mit natürlichen Filterstoffen 26 befüllt, die in auswechselbaren Lochkörben, Netzen o.dergl. angeordnet sein können, die ein einfaches und schnelles Auswechseln der verbrauchten Filterstoffe 26 gegen frische Filterstoffe ermöglichen. Diese natürlichen Filterstoffe 26 können Pflanzenreste und/oder Holzstückchen, insbesondere Hackschnitzel und/oder Rohhumus sein. Der Vorratsbehälter 9 ist teilweise gefüllt mit Pflanzenresten und/oder Holzstückchen, insbesondere Hackschnitzeln 27. Diese Füllung ruht auf einer Mineralstoffschicht 28, die z.B. eine Kies-Humus-Schicht sein kann und eine Filter-Bodenschicht 29 abdeckt, die wiederum aus natürlichen Filterstoffen besteht. Auch die Zulaufrinnen 17 mit den Verteileinrichtungen 20 sind mit natürlichen Filterstoffen befüllt. Die Pflanzbeete 19 können mit einer Kiesschüttung versehen sein, die mit Humus abgedeckt ist.

Die Rückhaltebecken 3,4,5, die Sickerstrecken 6, der Vorratsbehälter 9 sowie die Zulaufrinnen 17 mit ihren Verteilereinrichtungen 20 sind mit einer aus biologischen Abdeckstoffen, z.B. Pflanzenresten, groben Holzhackschnitzeln o.dergl. bestehenden Immissionsschutzschicht 30 abgedeckt, die ihrerseits eine obere Abdeckschicht 31 aus Pflanzenresten, Rohhumus o.dergl. aufweisen kann.

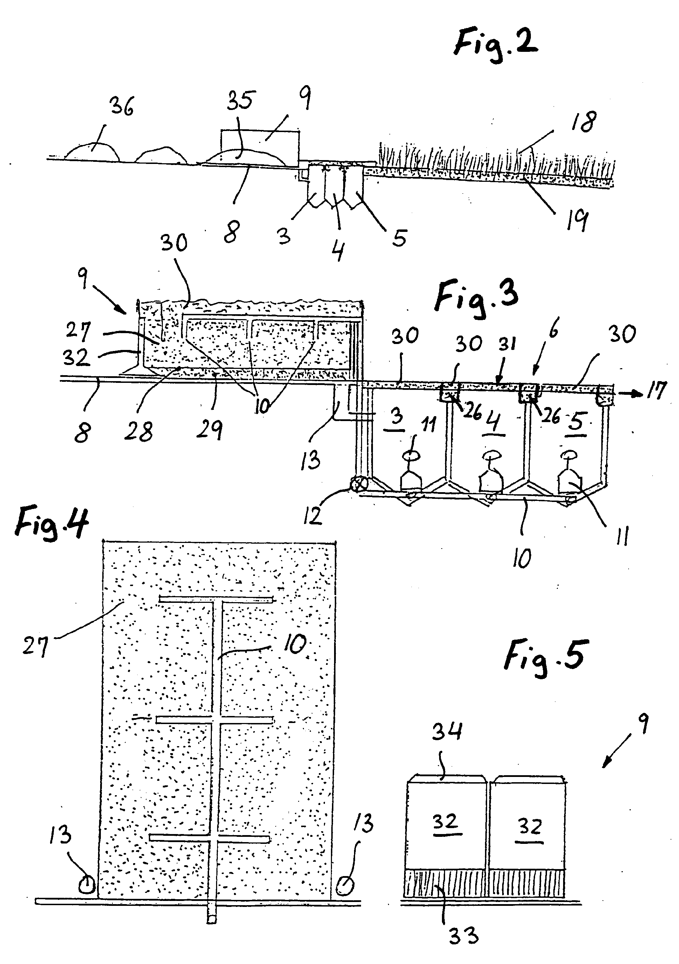

Der nach oben offene Vorratsbehälter 9 kann aus seitlichen Stellwänden 32 bestehen, von denen zumindest einige Wasserablaufschlitze 33 aufweisen können (siehe Figur 5). Um diese Stellwände 32 z.B. mit einem Stapler umsetzen zu können, beispielsweise um das Volumen des Vorratsbehälters 9 zu verändern, können die Stellwände 32 mit entsprechenden Eingriffsöffnungen 34 versehen sein.

Das zu reinigende Abwasser fließt über den Graben 2 in das erste Rückhaltebecken 3 und von dort über die Sickerstrecken 6 nacheinander in die nachgeschalteten Rückhaltebecken 4 und 5, in denen sich die genannten Absetzprodukte auf dem Boden absetzen, von wo sie durch entsprechende Intervallsteuerung der Ventilschieber 11 über die Pumpe 12 und das Leitungssystem 10 in den Vorratsbehälter 9 gepumpt werden, dessen Immissionsschutzschicht 30 die Bildung von Faulgasen verhindert. Die Entwässerung der in den Vorratsbehälter 9 gepumpten Absetzprodukte erfolgt durch Abtropfen, wobei das Sickerwasser durch die Mineralstoffschicht 28 und die Filter-Bodenschicht 29 aufgrund des mit Gefälle verlegten wasserdichten Bodens 8 in den Wasserablauf 13 und von dort in das erste Rückhaltebecken 3 gelangt. Ist das Absetzprodukt im Vorratsbehälter 9 ausreichend entwässert, wird es - z.B. nach Beseitigung einer Seitenwandung des Vorratsbehälters 9 - mit Hilfe eines Ladewagens o.dergl. - vermischt mit den im Vorratsbehälter 9 befindlichen Zuschlagstoffen in Form von z.B. Hackschnitzeln 27 auf dem freien Lagerplatz 7 in Form von Mieten 35 gelagert. Das hier ablaufende Sickerwasser gelangt aufgrund des mit Gefälle verlegten wasserdichten Bodens 8 in den Bereich der Wasserabläufe 14 und von dort ebenfalls in das erste Rückhaltebecken 3. Nach ausreichender Entwässerung und Lagerzeit wird das entwässerte, mit Zuschlagstoffen versehene Absetzprodukt 16 vom freien Lagerplatz 7 zu dem Kompostierungs-Lagerplatz 15 verbracht und dort mit den verbrauchten natürlichen Filterstoffen 26 und/oder der jeweils verbrauchten Immissionsschutzschicht 30 vermischt, die als natürliche Zuschlagstoffe die Kompostierung verbessern und beschleunigen.

Die erfindungsgemäße Anlage kann auch nur als Kompostierungsanlage ohne die nachgeschalteten Pflanzbeete betrieben werden.

Auf dem erdverbundenen Lagerplatz 15 können auch die Materialien für die natürlichen Filterstoffe 26 und/oder die Immissions-schutzschicht 30 bevorratet werden (siehe die schematische angedeuteten Aufschüttungen 36).

## Patentansprüche

1. Verfahren zur Reinigung kommunaler, industrieller und Agrar-Abwässer und zur Gewinnung von verwertbarem Humus, gekennzeichnet durch folgende Verfahrensschritte:
a) Das zu reinigende Abwasser wird aufgestaut, so daß sich Feststoffe absetzen können;
b) im Überlaufverfahren wird das vorgereinigte Abwasser aus der ersten Staustufe durch filternde, aus Pflanzenresten und/oder Holzstückchen (natürliche Filterstoffe) gebildete Sickerstrecken in zumindest eine weitere Staustufe geleitet;
c) das zurückbleibende Gemisch aus Dickstoffen und Schlamm (Absetzprodukt) wird abgepumpt, durch Abtropfen entwässert, anschließend auf einer Freifläche mit wasserdichtem Untergrund gelagert und schließlich zu Kompost umgewandelt;
d) das bei der genannten Entwässerung sowie bei der genannten Lagerung der Absetzprodukte anfallende Sickerwasser wird dem zu reinigenden Abwasser wieder zugesetzt;
e) zur Bildung eines biologischen Immissionsschutzes werden das aufgestaute Abwasser sowie das aus den Staustufen abgepumpte Absetzprodukt mit biologischen Abdeckstoffen, z.B. Pflanzenresten, groben Holzhackschnitzeln o.dergl. abgedeckt;
f) die den Immissionsschutz bildenden Stoffe werden bei nachlassender Wirkung gegen neue Stoffe ausgetauscht und den entwässertem Absetzprodukt zur Kompostierung beigegeben (natürliche Zuschlagstoffe).

2. Verfahren nach Anspruch 1, dadurch gekennzeichnet, daß die den Immissionsschutz bildenden Abdeckstoffe zusätzlich durch Pflanzenreste, Rohhumus o.dergl. abgedeckt werden.

3. Verfahren nach Anspruch 1 oder 2, dadurch gekennzeichnet, daß auch die die einzelnen Staustufen miteinander verbindenden Sickerstrecken mit einem entsprechenden Immissionsschutz abgedeckt werden.

4. Verfahren nach Anspruch 1, 2 oder 3, dadurch gekennzeichnet, daß das aus der letzten Staustufe austretende vorgereinigte Abwasser auf Sickerflächen geleitet wird, die mit gewässerreinigender Vegetation besiedelt werden (Pflanzbeete).

5. Verfahren nach Anspruch 4, dadurch gekennzeichnet, daß auch die die letzte Staustufe mit den Pflanzbeeten verbindenden Wasserzuläufe mit einem entsprechenden Immissionsschutz abgedeckt werden.

6. Verfahren nach Anspruch 4 oder 5, dadurch gekennzeichnet, daß die Pflanzbeete mit einer Kiesschüttung versehen werden, die mit Humus abgedeckt wird.

7. Verfahren nach einem der vorhergehenden Ansprüche, dadurch gekennzeichnet, daß das Abpumpen des Absetzproduktes intervallgesteuert erfolgt.

8. Verfahren nach einem der vorhergehenden Ansprüche, dadurch gekennzeichnet, daß die Kompostierung auf undichten und erdverbundenen Lagerplätzen erfolgt.

9. Verfahren nach einem der vorhergehenden Ansprüche, dadurch gekennzeichnet, daß die Pflanzbeete gepflegt und gegen Ende der Vegetationsruhe maschinell abgeerntet werden.

10. Anlage zur Reinigung kommunaler, industrieller und Agrar-Abwässer und zur Gewinnung von verwertbarem Humus, insbesondere zur Durchführung des Verfahrens nach einem der vorhergehenden Ansprüche, **gekennzeichnet** durch folgende Merkmale:
a) Ein erstes Rückhaltebecken (3) zur Aufnahme und als Staustufe für das kontinuierlich zugeleitete zu reinigende Abwasser;
b) dem ersten Rückhaltebecken (3) ist zumindest ein weiteres Rückhaltebecken (4,5) nachgeordnet, das mit dem ersten Rückhaltebecken (3) über zumindest eine einen Überlauf bildende, aus Pflanzenresten und/oder Holzstückchen und/oder Rohhumus (natürliche Filterstoffe 26) bestehende Sickerstrecken (6) verbunden ist;
c) zumindst ein Vorratsbehälter (9), der über ein Pumpen/Leitungssystem (10,11,12) mit den Rückhaltebecken (3,4,5) verbunden ist, dient zur Aufnahme des abgepumpten Gemisches aus Dickstoffen und Schlamm (Absetzprodukt), weist einen Ablauf (13) für das abtropfende Wasser auf und ist zumindest teilweise gefüllt mit Pflanzenresten und/oder Holzstückchen (27);
d) ein mit einem wasserdichten Boden (8) ausgerüsteter freier Lagerplatz (7), der zur Aufnahme des in dem genannten Vorratsbehälter (9) entwässerten Absetzproduktes dient und zumindest einen Ablauf (14) für Sickerwasser aufweist;
e) die Abläufe (13,14) des Vorratsbehälters (9) und des genannten Lagerplatzes (7) sind an eines der Rückhaltebecken (3) oder an deren Zulauf angeschlossen;
f) alle Rückhaltebecken (3,4,5) sowie der Vorratsbehälter (9) sind mit einer aus biologischen Abdeckstoffen, z.B. Pflanzenresten, groben Holzhackschnitzeln o.dergl. bestehenden Immissionsschutzschicht (30) abgedeckt;
g) ein erdverbundener Kompostierungs-Lagerplatz (15) zur Aufnahme des entwässerten Absetzproduktes (16) vom freien Lagerplatz (7), vermischt mit den entfernten Filter- und Immissionsschutzstoffen.

11. Anlage nach Anspruch 10, dadurch gekennzeichnet, daß die Immissionsschutzschicht (30) eine obere Abdeckschicht (31) auf Pflanzenresten, Rohhumus o.dergl. aufweist.

12. Anlage nach Anspruch 10 oder 11, dadurch gekennzeichnet, daß auch die die Rückhaltebecken (3,4,5) miteinander verbindenden Sickerstrecken (6) von einer entsprechenden Immissionsschutzschicht (30) abgedeckt sind.

13. Anlage nach Anspruch 10, 11 oder 12, dadurch gekennzeichnet, daß die die Sickerstrecken (6) füllenden natürlichen Filterstoffe (26) und/oder die Immissionsschutzschicht-Materialien in auswechselbaren Lochkörben, Netzen o.dergl. angeordnet.

14. Anlage nach einem der Ansprüche 10 bis 13, dadurch gekennzeichnet, daß der Vorratsbehälter (9) eine Filter-Bodenschicht (29) aus natürlichen Filterstoffen aufweist, die von einer Mineralstoffschicht (28), z.B. einer Kies-Humus-Schicht abgedeckt ist.

15. Anlage nach einem der Ansprüche 10 bis 14, dadurch gekennzeichnet, daß das letzte Rückhaltebecken (5) über Zulaufrinnen (17) mit Sickerflächen verbunden ist, die mit gewässerreinigender Vegetation (18) besiedelt sind (Pflanzbeete 19).

16. Anlage nach Anspruch 15, dadurch gekennzeichnet, daß die genannten Zulaufrinnen (17) Verteilereinrichtungen (20) für eine gleichmäßige Beschickung der Pflanzbeete (19) aufweisen.

17. Anlage nach Anspruch 15 oder 16, dadurch gekennzeichnet, daß die Zulaufrinnen (17) mit natürlichen Filterstoffen befüllt sind.

18. Anlage nach Anspruch 15, 16 oder 17, dadurch gekennzeichnet, daß die Zulaufrinnen (17) und/oder Verteilereinrichtungen (20) von einer entsprechenden Immissionsschutzschicht (30) abgedeckt sind.

19. Anlage nach einem der Ansprüche 10 bis 18, dadurch gekennzeichnet, daß der wasserdichte Boden (8) des freien Lagerplatzes (7) in Richtung auf seine Abläufe (14) mit Gefälle ausgebildet ist.

20. Anlage nach Anspruch 19, dadurch gekennzeichnet, daß der oder die Vorratsbehälter (9) auf dem wasserdichten Boden (8) des freien Lagerplatzes (7) stehen.

21. Anlage nach einem der Ansprüche 10 bis 20, dadurch gekennzeichnet, daß der Vorratsbehälter (9) u.a. aus seitlichen Stellwänden (32) besteht.

22. Anlage nach Anspruch 21, dadurch gekennzeichnet, daß zumindest eine Wandung des Vorratsbehälters (9) Wasserablaufschlitze (33) aufweist.

23. Anlage nach einem der Ansprüche 10 bis 22, dadurch gekennzeichnet, daß das Volumen des Vorratsbehälters (9) veränderbar ist.

24. Anlage nach einem der Ansprüche 10 bis 23, dadurch gekennzeichnet, daß die Pflanzenbeete (19) durch Wirtschaftwege (21) unterteilt sind.

25. Anlage nach einem der Ansprüche 10 bis 24, dadurch gekennzeichnet, daß das zum Vorratsbehälter (9) führende Leitungssystem (10) einen Anschluß für Fäkal/Klärschlamm aufweist.

26. Anlage nach einem der Ansprüche 10 bis 25, dadurch gekennzeichnet, daß das Leitungssystem (10) über den Vorratsbehälter (9) geführt und hier hochklappbar ausgebildet ist.

## Claims

1. Process for the treatment of municipal, industrial and agricultural effluents and for the recovery of valuable humus, characterised by the following process steps:
a) The effluent to be treated is retained in order to allow solids to settle;
b) the pre-treated effluent from the first retaining stage is fed by overflow through filtering percolating beds formed from plant residues and/or wood fragments (natural filter media) into at least one further retaining stage;
c) the mixture which remains, comprising thick matter and sludge (sediment), is pumped off, dewatered by gravity, subsequently stored in an open-air area with an impermeable base, and finally converted to compost;
d) the filtrate resulting from the said dewatering and retention of the sediment is added again to the effluent to be treated;
e) the retained effluent and the sediment pumped off from the retaining stages are covered over with biological matter, eg plant residues, coarse wood chippings or the like, in order to form a biological emission barrier;
f) the matter forming the emission barrier is replaced with new matter when its effectiveness diminishes and is added to the dewatered sediment for composting (natural additives).

2. Process according to Claim 1, characterised in that the matter forming the emission barrier may additionally be covered over with plant residues, raw humus or the like.

3. Process according to Claim 1 or 2, characterised in that the percolating beds which link together the individual retaining stages are also covered over by a corresponding emission barrier.

4. Process according to Claim 1, 2 or 3, characterised in that the pretreated effluent emerging from the final retaining stage is fed over percolating surfaces which have ground cover of effluent-purifying vegetation (plant beds).

5. Process according to Claim 4, characterised in that the water inlets linking the final retaining stage with the plant beds are also covered over by a corresponding emission barrier.

6. Process according to Claim 4 or 5, characterised in that the plant beds are provided with a gravel bed which is covered with humus.

7. Process according to one of the preceding claims, characterised in that pumping-off of the sediment is controlled to an intermittent programme.

8. Process according to one of the preceding claims, characterised in that composting takes place in permeable storage places in contact with the earth.

9. Process according to one of the preceding claims, characterised in that the plant beds are tended and mechanically harvested towards the end of their dormant period.

10. Installation for the treatment of municipal, industrial and agricultural effluents and for the recovery of valuable humus, especially for the implementation of the process according to one of the preceding claims, characterised by the following features:
a) A first reservoir (3) to receive the effluent and serve as a retaining stage for the continuous flow of effluent to be treated;
b) at least one further reservoir (4, 5) is disposed downstream of the first reservoir (3) and is linked to the first reservoir (3) via at least one percolating bed (6) forming an overflow and comprising plant residues and/or wood fragments and/or raw humus (natural filter media 26);
c) at least one supply vessel (9) which is linked to the reservoirs (3, 4, 5) via a pumping/piping system (10, 11, 12), serves to receive the pumped-off mixture of thick matter and sludge (sediment), exhibits an outlet (13) for the trickling water and is at least partially filled with plant residues and/or wood fragments (27);
d) an open-air storage place (7) which is equipped with an impermeable base (8), which serves to receive the sediment dewatered in the said supply vessel (9) and which exhibits at least one filtrate outlet (14);
e) the outlets (13, 14) from the supply vessel (9) and from the said storage place (7) are connected to one of the reservoirs (3) or to the inlet thereof;
f) all reservoirs (3, 4, 5) and the supply vessel (9) are covered over with an emission barrier layer (30) comprising biological matter, eg plant residues, coarse wood chippings or the like;
g) a composting storage place (15) in contact with the earth for receiving the dewatered sediment (16) from the open-air storage place (7), mixed with the removed filter media and the emission barrier matter.

11. Installation according to Claim 10, characterised in that the emission barrier layer (30) exhibits an upper covering layer (31) of plant residues, raw humus or the like.

12. Installation according to Claim 10 or 11, characterised in that the percolating beds (6) which link together the reservoirs (3, 4, 5) are also covered over with a corresponding emission barrier layer (30).

13. Installation according to Claim 10, 11 or 12, characterised in that the natural filter media (26) with which the percolating beds (6) are filled and/or the emission barrier layer materials are disposed in replaceable perforated baskets, nets or the like.

14. Installation according to one of Claims 10 to 13, characterised in that the supply vessel (9) exhibits a filtering base layer (29) of natural filter media, which is covered by a mineral substance layer (28), eg a layer composed of gravel and humus.

15. Installation according to one of Claims 10 to 14, characterised in that the final reservoir (5) is linked via inlet channels (17) with percolating surfaces which have ground cover of effluent-purifying vegetation (18) (plant beds 19).

16. Installation according to Claim 15, characterised in that the said inlet channels (17) exhibit distribution devices (20) to ensure an even feed to the plant beds (19).

17. Installation according to Claim 15 or 16, characterised in that the inlet channels (17) are charged with natural filter media.

18. Installation according to Claim 15, 16 or 17, characterised in that the inlet channels (17) and/or distribution devices (20) are covered over by a corresponding emission barrier layer (30).

19. Installation according to one of Claims 10 to 18, characterised in that the impermeable base (8) of the open-air storage place (7) forms a descending gradient towards the outlets thereof (14).

20. Installation according to Claim 19, characterised in that the supply vessel or vessels (9) stand(s) on the impermeable base (8) of the open-air storage place (7).

21. Installation according to one of Claims 10 to 20, characterised in that the supply vessel (9) inter alia comprises movable side walls (32).

22. Installation according to Claim 21, characterised in that at least one wall of the supply vessel (9) exhibits water outlet slits (33).

23. Installation according to one of Claims 10 to 22, characterised in that the volume of the supply vessel (9) may be adjusted.

24. Installation according to one of Claims 10 to 23, characterised in that the plant beds (19) are subdivided by farm roads (21).

25. Installation according to one of Claims 10 to 24, characterised in that the piping system (10) leading to the supply vessel (9) exhibits a faecal/sewage sludge connection point.

26. Installation according to one of Claims 10 to 25, characterised in that the piping system (10) is run via the supply vessel (9) and is formed in such a manner as to be upwardly tiltable at this point.

## Revendications

1. Procédé pour épurer des eaux résiduaires communales, industrielles et agricoles, et pour récupérer de l'humus valorisable, caractérisé par les étapes suivantes :
a) les eaux résiduaires à épurer sont retenues de façon que les matières solides puissent se décanter ;
b) suivant un processus de trop-plein, les eaux résiduaires préclarifiées sortant du premier étage de retenue, sont envoyées dans au moins un autre étage de retenue en passant à travers des sections d'infiltration filtrantes formées de résidus végétaux et/ou de petits morceaux de bois (matières filtrantes naturelles) ;
c) le mélange restant, constitué de matériaux consistants et de boues (produit de décantation) est extrait par pompage, déshydraté par égouttage puis étendu sur une surface libre comportant un fond étanche à l'eau, et finalement est converti en compost ;
d) l'eau d'infiltration, obtenue lors de la déshydratation mentionnée ci-dessus ainsi que lors de l'étendage des produits de décantation, est de nouveau ajoutée aux eaux à épurer ;
e) pour assurer une protection biologique contre les immixtions, les eaux résiduaires retenues, ainsi que le produit de décantation extrait par pompage des étages de retenue, sont recouverts de matériaux de recouvrement biologiques, par exemple des résidus végétaux, des copeaux de bois grossiers ou analogues ;
f) les substances formant la protection contre les immixtions sont remplacées par des substances neuves quand le rendement diminue, et sont ajoutées, pour compostage, au produit de décantation déshydraté (agrégats naturels).

2. Procédé selon la revendication 1, caractérisé en ce que les matières de recouvrement formant la protection contre les Immixtions sont de plus recouvertes par des résidus végétaux, de l'humus brut ou analogues.

3. Procédé selon la revendication 1 ou 2, caractérisé en ce que même les sections d'infiltration, qui relient les uns aux autres les différents étages de retenue, sont recouvertes d'une protection correspondante contre les immixtions.

4. Procédé selon la revendication 1, 2 ou 3, caractérisé en ce que les eaux résiduaires préclarifiées sortant du dernier étage de retenue sont envoyées sur des zones d'infiltration, qui sont plantées d'une végétation assurant l'épuration des eaux (parterres végétaux).

5. Procédé selon la revendication 4, caractérisé en ce que même les arrivées d'eau qui relient le dernier étage de retenue aux parterres végétaux, sont recouverts d'une protection correspondante contre les immixtions.

6. Procédé selon la revendication 4 ou 5, caractérisé en ce que les parterres végétaux sont pourvus d'une couche de graviers recouverte d'humus.

7. Procédé selon l'une des revendications précédentes, caractérisé en ce que le pompage du produit de décantation s'effectue selon des intervalles périodiques.

8. Procédé selon l'une des revendications précédentes, caractérisé en ce que ce que le compostage est réalisé sur des aires non étanches et reliées à la terre.

9. Procédé selon l'une des revendications précédentes, caractérisé en ce que les parterres végétaux sont entretenus et, vers la fin de la période de repos de la végétation, peuvent être récoltés par des moyens mécaniques.

10. Installation pour épurer des eaux résiduaires communales, industrielles et agricoles, et pour récupérer de l'humus valorisable, en particulier pour mettre en oeuvre le procédé selon l'une des revendications précédentes, caractérisé par les particularités suivantes:
a) un premier bassin de retenue (3), destiné à recevoir les eaux résiduaires, et servant d'étage de retenue pour les eaux résiduaires à épurer, qui arrivent d'une manière continue ;
b) le premier bassin de retenue (3) est suivi d'au moins un autre bassin de retenue (4, 5) qui est relié au premier bassin de retenue (3) par l'intermédiaire d'au moins une section d'infiltration (6) formant un trop-plein et constituée de résidus végétaux et/ou de petits morceaux de bois et/ou d'humus brut (matières filtrantes naturelles 26) ;
c) au moins un réservoir de stockage (9) qui, par l'intermédiaire d'un système de pompes et de canalisations (10, 11, 12) est relié aux bassins de retenue (3, 4, 5), qui sert à recevoir le mélange extrait par pompage et constitué de matières consistantes et de boues (produit de décantation), qui présente une évacuation (13) pour l'eau qui s'est égouttée, et qui est, au moins partiellement, rempli de résidus végétaux et/ou de petits morceaux de bois (27) ;
d) une aire de d'étendage libre (7) munie d'un sol (8) étanche à l'eau, qui sert à recevoir le produit de décantation déshydraté dans le réservoir de stockage (9) mentionné ci-dessus et comporte au moins une évacuation (14) pour l'eau d'infiltration ;
e) les évacuations (13, 14) du réservoir de stockage (9) et de l'aire d'étendage (7) mentionnée ci-dessus sont raccordées à l'un des bassins de retenue (3) ou à l'entrée de ceux-ci ;
f) tous les bassins de retenue (3, 4, 5), ainsi que le réservoir de stockage (9), sont recouverts d'une couche (30) de protection contre les immixtions constituée de matériaux de recouvrement biologiques, par exemple des résidus végétaux, des copeaux de bois grossiers ou analogues ;
g) une aire d'étendage et de compostage (15) reliée à la terre, destinée à recevoir le produit de décantation (16) déshydraté provenant de l'aire d'étendage (7) libre, en mélange avec les matières filtrantes et les produits de protection contre les immixtions éliminés.

11. Installation selon la revendication 10, caractérisée en ce que la couche (30) de protection contre les immixtions possède une couche de recouvrement supérieure (31) constituée de résidus végétaux, d'humus brut ou analogues.

12. Installation selon la revendication 10 ou 11, caractérisée en ce que même les sections d'infiltration (6) qui qui relient les uns aux autres les bassins de retenue (3, 4, 5) sont recouvertes d'une couche correspondante (30) de protection contre les immixtions.

13. Installation selon la revendication 10, 11 ou 12, caractérisée en ce que les matières filtrantes naturelles (26) qui remplissent les sections d'infiltration (6) et/ou les matériaux de la couche de protection contre les immixtions sont disposés dans des paniers perforés, des filets ou analogues, interchangeables.

14. Installation selon l'une des revendications 10 à 13, caractérisée en ce que le réservoir de stockage (9) comporte une couche filtrante de fond (29) en matières filtrantes naturelles, cette couche étant recouverte d'une couche de matières minérales (28), par exemple d'une couche de graviers et d'humus.

15. Installation selon l'une des revendications 10 à 14, caractérisée en ce que le dernier bassin de retenue (5) est, par l'intermédiaire de rigoles d'amenée (17), relié à des aires d'infiltration qui sont plantées d'une végétation (18) assurant l'épuration des eaux (parterres végétaux (19)).

16. Installation selon la revendication 15, caractérisée en ce que les rigoles d'amenée (17) comportent des dispositifs de répartition (20) destinés à alimenter d'une manière régulière les parterres végétaux (19).

17. Installation selon la revendication 15 ou 16, caractérisée en ce que les rigoles d'amenée (17) sont remplies de matières filtrantes naturelles.

18. Installation selon la revendication 15, 16 ou 17, caractérisée en ce que les rigoles d'amenée (17) et/ou les dispositifs de répartition (20) sont recouverts d'une couche correspondante (30) de protection contre les immixtions.

19. Installation selon l'une des revendications 10 à 18, caractérisée en ce que le sol (8) étanche à l'eau de l'aire d'étendage libre (7) présente une pente dans la direction de ses évacuations (14).

20. Installation selon la revendication 19, caractérisée en ce que le ou les réservoirs de stockage (9) se trouvent sur le sol (8) étanche à l'eau de l'aire d'étendage libre (7).

21. Installation selon l'une des revendications 10 à 20, caractérisée en ce que le réservoir de stockage (9) est entre autres constitué de parois latérales mobiles (32).

22. Installation selon la revendication 21, caractérisée en ce qu'au moins une paroi du réservoir de stockage (9) comporte des fentes (33) d'évacuation des eaux.

23. Installation selon l'une des revendications 10 à 22, caractérisée en ce que le volume du réservoir de stockage (9) peut être modifié.

24. Installation selon l'une des revendications 10 à 23, caractérisée en ce que les parterres végétaux (19) sont subdivisés par des chemins d'exploitation (21).

25. Installation selon l'une des revendications 10 à 24, caractérisée en ce que le système de conduites (10) conduisant au réservoir de stockage (9) comporte un raccordement pour les boues fécales et les boues de clarification.

26. Installation selon l'une des revendications 10 à 25, caractérisée en ce que le système de conduites (10) passe au-dessus des réservoirs de stockage (9) et est conçu à cet endroit de façon à pouvoir être relevé vers le haut.
